(19) Europäisches Patentamt
European Patent Office
Office européen des brevets

(11) **EP 3 282 574 A1**

(12) **EUROPEAN PATENT APPLICATION**
published in accordance with Art. 153(4) EPC

(43) Date of publication:
**14.02.2018 Bulletin 2018/07**

(51) Int Cl.:
***H02P 6/17*** *(2016.01)*

(21) Application number: **16776564.3**

(22) Date of filing: **06.04.2016**

(86) International application number:
**PCT/JP2016/061263**

(87) International publication number:
**WO 2016/163398 (13.10.2016 Gazette 2016/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.04.2015 JP 2015080769
10.04.2015 JP 2015080770**

(71) Applicant: **MITSUBA Corporation
Kiryu-shi
Gunma 376-8555 (JP)**

(72) Inventors:
• **HOSHINO Takashi
Kiryu-shi
Gunma 376-8555 (JP)**
• **IWAZAKI Tamotsu
Kiryu-shi
Gunma 376-8555 (JP)**

(74) Representative: **Cabinet Laurent & Charras
Le Contemporain
50 Chemin de la Bruyère
69574 Dardilly Cedex (FR)**

(54) **MOTOR DRIVE APPARATUS AND METHOD OF CONTROLLING MOTOR DRIVE APPARATUS**

(57)  In a motor drive apparatus, the brushless motor (11) has a three-phase motor structure, the Hall sensor (12) detects a magnetic flux change signal in an operation of the brushless motor (11), the control unit (13) obtains a rotor rotation number of the brushless motor (11) based on the magnetic flux change signal, calculates a predetermined electric angle even when the rotor rotation number is changed, and causes the gate driver (14) to output a PWM signal by which a power distribution timing to each phase of the brushless motor (11) is switched at the predetermined electric angle, and the inverter (15) sinusoidally changes and supplies a voltage supply to a stator coil of the brushless motor (11) based on the PWM signal.

FIG. 1

**Description**

TECHNICAL FIELD

The present invention relates to a motor drive apparatus and a motor drive apparatus control method.
Priority is claimed on Japanese Patent Application No. 2015-080769 filed on April 10, 2015, and Japanese Patent Application No. 2015-080770 filed on April 10, 2015, the contents of which are incorporated herein by reference.

BACKGROUND

A sine wave drive that sinusoidally changes a stator coil voltage of a motor is featured by lower noise and lower vibration characteristics than a rectangular wave drive that changes the stator coil voltage in a rectangular wave-form. A costly absolute angle sensor (resolver or the like) is required in order to perform the sine wave drive. When the absolute angle sensor is not used (for example, when a Hall sensor is used), by estimating a rotor position at each elapse of a certain period of time after the output duration of the Hall sensor (time that corresponds to a sampling timing when the output value of the resolver is read) and switching a power distribution timing, it is possible to perform the sine wave drive although the accuracy is reduced.

[Related Art Documents]

[Patent Documents]

[Patent Document 1] Japanese Unexamined Patent Application, First Publication No. H9-121583

SUMMARY OF INVENTION

PROBLEMS TO BE SOLVED BY THE INVENTION

However, in this case, a calculation in which the rotor position is estimated from a set time may be complicated, and a process load may be increased. Further, a calculation error of the rotor position estimation may be increased. Further, when maintaining high-resolution map data (SIN, COS, and the like) in order to reduce the error, a used memory volume may be increased.
Further, when estimating the rotor position and switching the power distribution timing, as the rotation number of the rotor is increased (as the rotation speed becomes higher), the switching time interval of the power distribution timing becomes shorter, and the process load at a high rotation speed may be increased.
An aspect of the present invention provides a motor drive apparatus and a motor drive apparatus control method capable of preventing an increase in process load in a calculation in which a rotor position is estimated and preventing an increase in process load at a high-speed rotation.

MEANS FOR SOLVING THE PROBLEM

In an embodiment, a motor drive apparatus is a motor drive apparatus that includes a brushless motor, a Hall sensor, a control unit, a gate driver, and an inverter, the brushless motor having a three-phase motor structure. The Hall sensor detects a magnetic flux change signal in an operation of the brushless motor. The control unit obtains a rotor rotation number of the brushless motor based on the magnetic flux change signal, calculates a predetermined electric angle even when the rotor rotation number is changed, and causes the gate driver to output a PWM signal by which a power distribution timing to each phase of the brushless motor is switched at the predetermined electric angle. The inverter sinusoidally changes and supplies a voltage supply to a stator coil of the brushless motor based on the PWM signal.
Further, in the motor drive apparatus of the above embodiment, the control unit may calculate the predetermined electric angle by dividing an electric angle 60-degree rotation time which is an edge interval time of the Hall sensor by an aliquot of 60 and may change the PWM signal each time the predetermined electric angle elapses from the electric angle 60-degree rotation time.
Further, in the motor drive apparatus of the above embodiment, the control unit may have a table in which a trigonometric function value used for generating the PWM signal is stored.
In the motor drive apparatus of the above embodiment, the control unit may set the predetermined electric angle such that a control order component that is calculated at a predetermined electric angle is not matched with a resonant frequency of the brushless motor.

In another embodiment, a motor drive apparatus control method is a control method of a motor drive apparatus that includes a brushless motor having a three-phase motor structure, a Hall sensor, a control unit, a gate driver, and an inverter. The motor drive apparatus control method includes a detection step in which the Hall sensor detects a magnetic flux change signal in an operation of the brushless motor, an output step in which the control unit obtains a rotor rotation number of the brushless motor based on the magnetic flux change signal, calculates a predetermined electric angle even when the rotor rotation number is changed, and causes the gate driver to output a PWM signal by which a power distribution timing to each phase of the brushless motor is switched at the predetermined electric angle, and a supply step in which the inverter sinusoidally changes and supplies a voltage supply to a stator coil of the brushless motor based on the PWM signal.

Further, in another embodiment, a motor drive apparatus is a motor drive apparatus that includes a brushless motor, a Hall sensor, a control unit, a gate driver, and an inverter, the brushless motor having a three-phase motor structure. The Hall sensor detects a magnetic flux change signal in an operation of the brushless motor. The control unit obtains a rotor rotation number of the brushless motor based on the magnetic flux change signal, calculates a plurality of predetermined electric angles in accordance with a change of the rotor rotation number, selects one predetermined electric angle from the plurality of predetermined electric angles, and causes the gate driver to output a PWM signal by which a power distribution timing to each phase of the brushless motor is switched at the selected predetermined electric angle. The inverter sinusoidally changes and supplies a voltage supply to a stator coil of the brushless motor based on the PWM signal.

Further, in the motor drive apparatus of the above embodiment, the plurality of predetermined electric angles includes two predetermined electric angles which are a first predetermined electric angle and a second predetermined electric angle, and a predetermined number by which an electric angle 60-degree rotation time which is an edge interval time of the Hall sensor is divided includes two predetermined numbers which are a first predetermined number and a second predetermined number. The second predetermined number is a smaller value than the first predetermined number. When the rotor rotation number is less than a preset rotor rotation number, the control unit may calculate the first predetermined electric angle by dividing the electric angle 60-degree rotation time by the first predetermined number and may change the PWM signal each time the first predetermined electric angle elapses from the electric angle 60-degree rotation time. When the rotor rotation number is equal to or more than the preset rotor rotation number, the control unit may calculate the second predetermined electric angle by dividing the electric angle 60-degree rotation time by the second predetermined number and may change the PWM signal each time the second predetermined electric angle elapses from the electric angle 60-degree rotation time.

Further, in the motor drive apparatus of the above embodiment, the control unit may have a table in which a trigonometric function value used for generating the PWM signal is stored.

Further, in another embodiment, a motor drive apparatus control method is a control method of a motor drive apparatus that includes a brushless motor having a three-phase motor structure, a Hall sensor, a control unit, a gate driver, and an inverter. The motor drive apparatus control method includes a detection step in which the Hall sensor detects a magnetic flux change signal in an operation of the brushless motor, an output step in which the control unit obtains a rotor rotation number of the brushless motor based on the magnetic flux change signal, calculates a plurality of predetermined electric angles in accordance with a change of the rotor rotation number, selects one predetermined electric angle from the plurality of predetermined electric angles, and causes the gate driver to output a PWM signal by which a power distribution timing to each phase of the brushless motor is switched at the selected predetermined electric angle, and a supply step in which the inverter sinusoidally changes and supplies a voltage supply to a stator coil of the brushless motor based on the PWM signal.

ADVANTAGE OF THE INVENTION

According to an aspect of the present invention, the control unit calculates the rotor rotation number based on the magnetic flux change signal and causes the gate driver to output the PWM signal by which the power distribution timing to each phase of the brushless motor is switched at the predetermined electric angle even when the rotation number is changed. The inverter sinusoidally changes and supplies the voltage supply to the stator coil of the brushless motor based on the PWM signal. Thereby, it is possible to provide a motor drive apparatus and a motor drive apparatus control method capable of preventing an increase in process load in a calculation in which a rotor position is estimated.

Further, according to an aspect of the present invention, the control unit calculates the rotor rotation number based on the magnetic flux change signal, calculates the plurality of predetermined electric angles in accordance with the change of the rotor rotation number, selects one predetermined electric angle from the plurality of predetermined electric angles, and causes the gate driver to output the PWM signal by which the power distribution timing to each phase of the brushless motor is switched at the selected predetermined electric angle. The inverter sinusoidally changes and supplies the voltage supply to the stator coil of the brushless motor based on the PWM signal. Thereby, it is possible to provide a motor drive apparatus and a motor drive apparatus control method capable of preventing an increase in process load in a calculation in which a rotor position is estimated and preventing an increase in process load at a high-speed rotation.

BRIEF DESCRIPTION OF THE DRAWINGS

FIG. 1 is a view showing a configuration of a motor drive apparatus.
FIG. 2 is a flowchart in an operation of the motor drive apparatus.
FIG. 3 is a timing chart showing an operation of the motor drive apparatus.
FIG. 4 is a view describing how to set an electric angle θ.
FIG. 5 is a view describing a conversion method of a PWM Duty for different drive methods.
FIG. 6 is a view describing a method in which the drive method is switched.
FIG. 7 is a timing chart showing an operation of the motor drive apparatus 1.
FIG. 8 is a timing chart showing an operation of the motor drive apparatus 1.

DESCRIPTION OF THE EMBODIMENTS

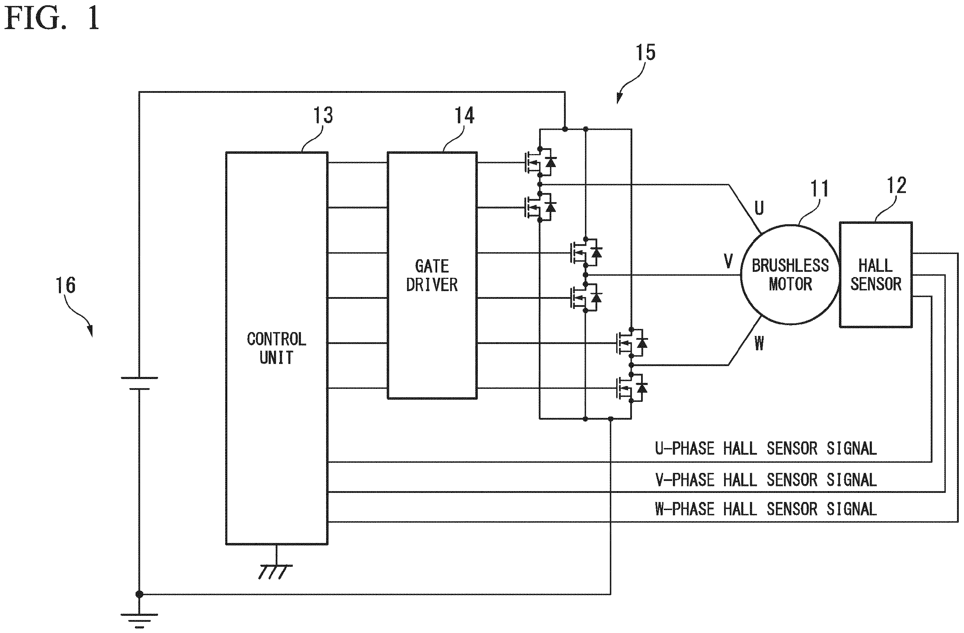

Hereinafter, an embodiment of the present invention is described with reference to the drawings. FIG. 1 is a view showing a configuration of a motor drive apparatus 1. The motor drive apparatus 1 shown in FIG. 1 includes a brushless motor 11, a Hall sensor 12, a control unit 13, a gate driver 14, an inverter 15, and a direct current (DC) electric power source 16.

The brushless motor 11 is a motor having a three-phase motor structure. The brushless motor 11 includes a stator on which a U-phase stator coil, a V-phase stator coil, and a W-phase stator coil which are three-phase armature windings are wound and a permanent magnet rotor having a plurality of magnetic poles.

Further, the Hall sensor 12 is attached to the brushless motor 11 in the vicinity of the permanent magnet rotor. The Hall sensor 12 is formed of three Hall sensors which are a U-phase Hall sensor, a V-phase Hall sensor, and a W-phase Hall sensor by which a magnetic flux change signal when the brushless motor is operated is detected. The U-phase Hall sensor detects switching of the magnetic pole of the permanent magnet rotor and outputs the detected result as a U-phase Hall sensor signal which is a binary signal of high (H) or low (L) to the control unit 13. The V-phase Hall sensor detects switching of the magnetic pole of the permanent magnet rotor and outputs the detected result as a V-phase Hall sensor signal which is a binary signal of H or L to the control unit 13. The W-phase Hall sensor detects switching of the magnetic pole of the permanent magnet rotor and outputs the detected result as a W-phase Hall sensor signal which is a binary signal of H or L to the control unit 13.

The control unit 13 obtains a rotor rotation number of the brushless motor 11 based on the U-phase Hall sensor signal, the V-phase Hall sensor signal, and the W-phase Hall sensor signal, calculates a predetermined electric angle even when the rotor rotation number is changed, and causes the gate driver 14 to output a PWM signal by which a power distribution timing to each phase of the brushless motor 11 is switched at the predetermined electric angle.

The inverter 15 sinusoidally changes and supplies a voltage supply to a stator coil of the brushless motor 11 based on the PWM signal. The DC electric power source 16 supplies a DC voltage used for performing a voltage supply to the stator coil of the brushless motor 11 by the inverter 15.

The power distribution timing is described. In the related art, for example, when performing a 180-degree sine wave drive in a 6-pole 9-slot three-phase brushless motor, a power distribution timing T is fixed, and therefore, it is necessary to calculate an electric angle θ from the power distribution timing T. The power distribution timing T is obtained by an expression "T = electric angle 60-degree rotation time / 60 × electric angle θ". The electric angle 60-degree rotation time is, for example, a period of time between a time when the U-phase Hall sensor signal is changed from L to H and a time when the W-phase Hall sensor is changed from H to L. For example, when the electric angle 60-degree rotation time is 1.11 ms, the rotor rotation number is 3000 rpm. Accordingly, by substituting the electric angle 60-degree rotation time = 1.11 ms and T = 0.1 ms in the above expression, the electric angle θ when the rotor rotation number is 3000 rpm is 5.4 degrees. When the electric angle 60-degree rotation time is 3.33 ms, the rotor rotation number is 1000 rpm. Accordingly, by substituting the electric angle 60-degree rotation time = 3.33 ms and T = 0.1 ms in the above expression, the electric angle θ when the rotor rotation number is 1000 rpm is 1.8 degrees. In this way, when the power distribution timing T is fixed, it is necessary to calculate the electric angle θ in accordance with the rotor rotation number from the power distribution timing T. Therefore, in the related art, the calculation in which the rotor position (electric angle θ) is estimated from the power distribution timing T is complicated, and the process load in the calculation in which the rotor position is estimated may be increased.

Further, when it is assumed that the map data of sin and cos is maintained at a resolution of one degree, at least 360 data of 0 to 359 degrees are required, and a calculation error of 0.4 degree or 0.2 degree occurs. Further, for example, when the resolution is 0.1 degree, tenfold 3600 data is required.

Therefore, in the present embodiment, the power distribution timing T is not a fixed timing as in the related art but is changed as a predetermined electric angle obtained by dividing the electric angle 60-degree rotation time by a predetermined number. That is, when the electric angle θ is fixed to a predetermined electric angle, it is possible to determine the power distribution timing T in accordance with the rotor rotation number.

For example, when the electric angle 60-degree rotation time is 3.33 ms, the rotor rotation number is 1000 rpm from the Hall sensor signal. At this time, the predetermined electric angle (θ = 10 degrees) may be obtained by dividing the electric angle 60-degree rotation time by 6 as the predetermined number in order to make the power distribution timing 0.555 ms. Further, when the electric angle 60-degree rotation time is 1.11 ms, the rotor rotation number is 3000 rpm from the Hall sensor signal. At this time, the predetermined electric angle (θ = 10 degrees) may be obtained by dividing the electric angle 60-degree rotation time by the predetermined number of 6 in order to make the power distribution timing 0.185 ms.

In this way, in the present embodiment, the power distribution timing T as the predetermined electric angle obtained by dividing the electric angle 60-degree rotation time by the predetermined number is changed.

Therefore, the control unit 13 obtains the rotor rotation number of the brushless motor 11 based on the U-phase Hall sensor signal, the V-phase Hall sensor signal, and the W-phase Hall sensor signal, calculates the predetermined electric angle even when the rotor rotation number is changed, and causes the gate driver 14 to output the PWM signal by which the power distribution timing to each phase of the brushless motor 11 is switched at the predetermined electric angle. The control unit 13 calculates the predetermined electric angle by dividing the electric angle 60-degree rotation time which is the edge interval time of the Hall sensor 12 by the predetermined number and changes the PWM signal each time the predetermined electric angle elapses from the electric angle 60-degree rotation time.

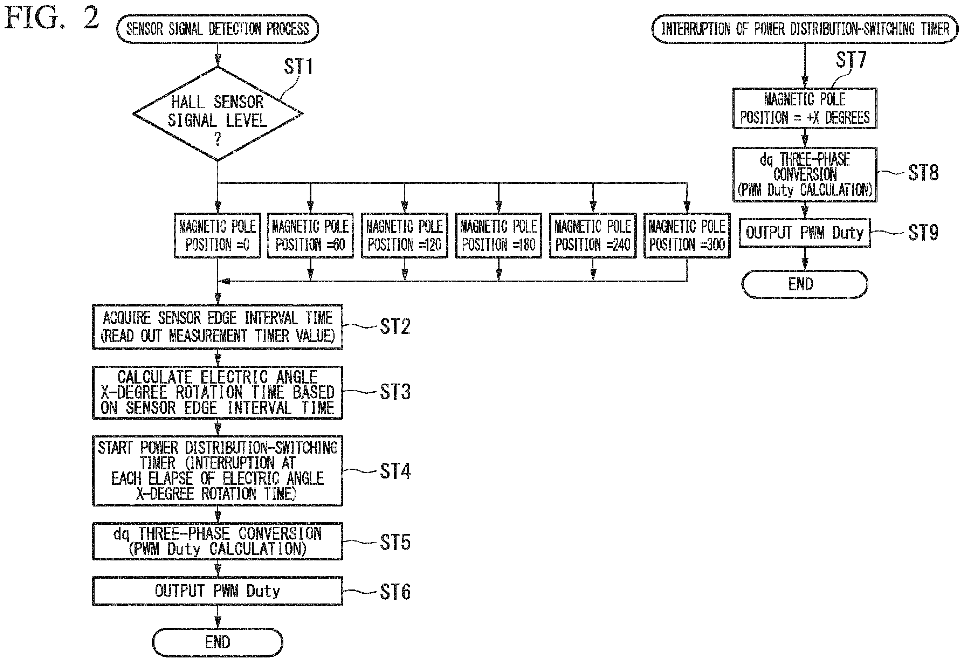

Hereinafter, with reference to FIG. 2, a description is given of how the control unit 13 determines the predetermined electric angle and changes the PWM signal each time the predetermined electric angle elapses from the electric angle 60-degree rotation time. FIG. 2 is a flowchart in an operation of the motor drive apparatus 1.

The control unit 13 determines a level of the Hall sensor signal (U-phase Hall sensor signal, V-phase Hall sensor signal, W-phase Hall sensor signal) (Step ST1).

The control unit 13 determines magnetic pole position = 0, magnetic pole position = 60, magnetic pole position = 120, magnetic pole position = 180, magnetic pole position = 240, and magnetic pole position = 300 from the level of the Hall sensor signal.

The magnetic pole position = 0 is a range in which the electric angle θ is 0 degree to 60 degrees.

The control unit 13 determines that the magnetic pole position = 0 when the U-phase Hall sensor signal is H, the V-phase Hall sensor signal is L, and the W-phase Hall sensor signal is H.

The magnetic pole position = 60 is a range in which the electric angle θ is 60 degrees to 120 degrees.

The control unit 13 determines that the magnetic pole position = 60 when the U-phase Hall sensor signal is H, the V-phase Hall sensor signal is L, and the W-phase Hall sensor signal is L.

The magnetic pole position = 120 is a range in which the electric angle θ is 120 degrees to 180 degrees.

The control unit 13 determines that the magnetic pole position = 120 when the U-phase Hall sensor signal is H, the V-phase Hall sensor signal is H, and the W-phase Hall sensor signal is L.

The magnetic pole position = 180 is a range in which the electric angle θ is 180 degrees to 240 degrees.

The control unit 13 determines that the magnetic pole position = 180 when the U-phase Hall sensor signal is L, the V-phase Hall sensor signal is H, and the W-phase Hall sensor signal is L.

The magnetic pole position = 240 is a range in which the electric angle θ is 240 degrees to 300 degrees.

The control unit 13 determines that the magnetic pole position = 240 when the U-phase Hall sensor signal is L, the V-phase Hall sensor signal is H, and the W-phase Hall sensor signal is H.

The magnetic pole position = 300 is a range in which the electric angle θ is 300 degrees to 360 degrees.

The control unit 13 determines that the magnetic pole position = 300 when the U-phase Hall sensor signal is L, the V-phase Hall sensor signal is L, and the W-phase Hall sensor signal is H.

The control unit 13 acquires a sensor edge interval time (Step ST2).

In the case of the magnetic pole position = 0, the control unit 13 acquires a sensor edge interval time (electric angle 60-degree rotation time) from the Hall sensor signal (the U-phase Hall sensor signal, the V-phase Hall sensor signal, and the W-phase Hall sensor signal).

The control unit 13 acquires a sensor edge interval time at the magnetic pole position = 0 from a period of time between a time when the U-phase Hall sensor signal is changed from L to H and a time when the W-phase Hall sensor is changed from H to L.

The control unit 13 acquires a sensor edge interval time at the magnetic pole position = 60 from a period of time between a time when the W-phase Hall sensor signal is changed from H to L and a time when the V-phase Hall sensor is changed from L to H.

The control unit 13 acquires a sensor edge interval time at the magnetic pole position = 120 from a period of time between a time when the V-phase Hall sensor signal is changed from L to H and a time when the U-phase Hall sensor is changed from H to L.

The control unit 13 acquires a sensor edge interval time at the magnetic pole position = 180 from a period of time between a time when the U-phase Hall sensor signal is changed from H to L and a time when the W-phase Hall sensor is changed from L to H.

The control unit 13 acquires a sensor edge interval time at the magnetic pole position = 240 from a period of time between a time when the W-phase Hall sensor signal is changed from L to H and a time when the V-phase Hall sensor is changed from H to L.

The control unit 13 acquires a sensor edge interval time at the magnetic pole position = 300 from a period of time between a time when the V-phase Hall sensor signal is changed from H to L and a time when the U-phase Hall sensor is changed from L to H.

The control unit 13 calculates an electric angle X-degree rotation time based on the sensor edge interval time (Step ST3). When calculating the electric angle X-degree rotation time (predetermined electric angle), the control unit 13 calculates the electric angle X-degree rotation time by dividing the sensor edge interval time (electric angle 60-degree rotation time), for example, by an aliquot (predetermined number) of 60.

The control unit 13 estimates the Hall sensor signal interval (electric angle X-degree rotation time) from the last electric angle 60-degree rotation time and corrects the Hall sensor signal interval. When correcting the attachment dispersion of the Hall sensor 12, it is preferable to perform estimation from a moving average result of the electric angle X-degree rotation time and perform correction.

The control unit 13 starts an operation of a power distribution-switching timer and performs an interruption process at each elapse of the electric angle X-degree rotation time (Step ST4). At this time, the control unit 13 updates the timer using a time that is calculated using the latest sensor edge interval time.

The control unit 13 starts the operation of the power distribution-switching timer at a first electric angle X-degree rotation time in a magnetic pole position (i+1) × 60 followed by the magnetic pole position i × 60 (i = any of 0, 1, 2, 3, 4, and 5) determined in Step ST1.

The control unit 13 performs a dq three-phase conversion (PWM Duty calculation) (Step ST5).

The calculation is performed at the magnetic pole position of the Hall sensor 12, and therefore, an electric angle θ = (i+1) × 60 degrees is used for the calculation.

The control unit 13 outputs a PWM Duty (PWM command signal) (Step ST6). The control unit 13 outputs the calculated PWM Duty to the gate driver 14 and causes the gate driver 14 to output a PWM signal.

The control unit 13 starts the operation of the power distribution-switching timer at a j-th (j = 2 to 60 / X) electric angle X-degree rotation time at a magnetic pole position (i+1) (Step ST4).

The control unit 13 performs a process in which X degrees are added to the magnetic pole position (Step ST7).

This is for estimating that electric angle X-degree rotation has occurred in order to generate interruption at each electric angle X-degree rotation time.

The control unit 13 performs a dq three-phase conversion (PWM Duty calculation) (Step ST8).

The calculation is performed at the magnetic pole position of the Hall sensor 12, and therefore, an electric angle θ = (i+1) × 60 + (j-1) × X degrees is used for the calculation.

The control unit 13 outputs a PWM Duty (Step ST9). The control unit 13 outputs the calculated PWM Duty to the gate driver 14 and causes the gate driver 14 to output a PWM signal.

In this way, after finishing magnetic pole position detection at the magnetic pole position (i+1), the control unit 13 returns to Step 2 to move to magnetic pole position detection at the magnetic pole position (i+2). That is, the control unit 13 updates magnetic pole position recognition according to switching of the Hall sensor 12. At this time, even when the rotor is accelerated or decelerated, an absolute position (electric angle θ) is updated.

The dq three-phase conversion (PWM Duty calculation) performed by the control unit 13 is described.

The inverter 15 sinusoidally changes and supplies a voltage supply to the stator coil of the brushless motor 11 based on the PWM signal. Therefore, the control unit 13 performs calculation of the PWM Duty (PWM command signal) such that a voltage (U-phase voltage, V-phase voltage, W-phase voltage) supplied to the stator coil by the inverter 15 is represented by the following Expressions.

$$Vu = (\sqrt{2} \, / \, 3) \times (Vd \times \cos \theta - Vq \times \sin \theta)$$

$$Vv = (\sqrt{2} \, / \, 3) \times \{Vd \times \cos (\theta - 2\pi/3) - Vq \times \sin (\theta - 2\pi/3)\}$$

$$Vw = -Vu - Vv$$

Vd and Vq are command voltages input externally of the control unit 13. Vd represents a d-axis voltage, and Vq represents a q-axis voltage.

The PWM Duty (duty) is a ratio of a voltage level (for example, a level of each of the above Vu, Vv, and Vw to 12V) of the DC electric power source 16. The control unit 13 calculates the duty (ratio of time in which the PWM command signal is H to the electric angle X-degree rotation time) based on Expressions described above and outputs six PWM command signals as a digital signal having this duty to the gate driver 14.

When the upper FET that constitutes the inverter 15 is driven, the gate driver 14 increases the levels of three PWM command signals as the digital signal, generates the PWM signal, and drives the FET gate. When the lower FET that constitutes the inverter 15 is driven, the gate driver 14 generates the PWM signal while maintaining the levels of three PWM command signals as the digital signal and drives the FET gate.

Thereby, the control unit 13 causes the gate driver 14 to output the PWM signal by which the power distribution timing to each phase of the brushless motor 11 is switched at the electric angle X-degree rotation time. The inverter 15 sinusoidally changes and supplies a voltage supply to the stator coil of the brushless motor 11 based on the PWM signal.

In the present embodiment, the command voltage input externally of the control unit 13 is the q-axis voltage Vq, and the d-axis voltage Vd is constantly zero. When an advanced angle control is performed, the control may be performed by using a Hall sensor signal.

That is, the voltage (U-phase voltage, V-phase voltage, W-phase voltage) supplied to the stator coil by the inverter 15 is represented by the following Expressions.

$$Vu = (\sqrt{2} \ / 3) \times (-Vq \times \sin \theta)$$

$$Vv = (\sqrt{2} \ / 3) \times \{-Vq \times \sin (\theta - 2\pi/3)\}$$

$$Vw = -Vu - Vv$$

Thereby, the table in which the trigonometric function value used for generating the PWM signal by the control unit 13 is stored may preliminarily store sin θ, as map data, of which the number is (360 degrees / electric angle X-degree) = (60 degrees / predetermined number) × 6. In this way, it is possible to prevent a calculation error that has occurred in the related art and prevent the increase of the used memory volume.

Further, the process shown in FIG. 2 is performed with respect to electric angles of 0 to 360 degrees, and thereby, the power distribution is performed at a predetermined electric angle obtained by dividing the power distribution timing into (360 degrees / electric angle X). Thereby, it is possible to sinusoidally change the stator coil voltage of the brushless motor 11. That is, according to the motor drive apparatus 1, it is possible to accurately estimate the rotor position by using a lower-cost Hall sensor 12 and a control unit 13 having a simpler circuit configuration than a resolver, and it is possible to perform an appropriate motor drive in which the stator coil voltage of the brushless motor 11 is sinusoidally changed.

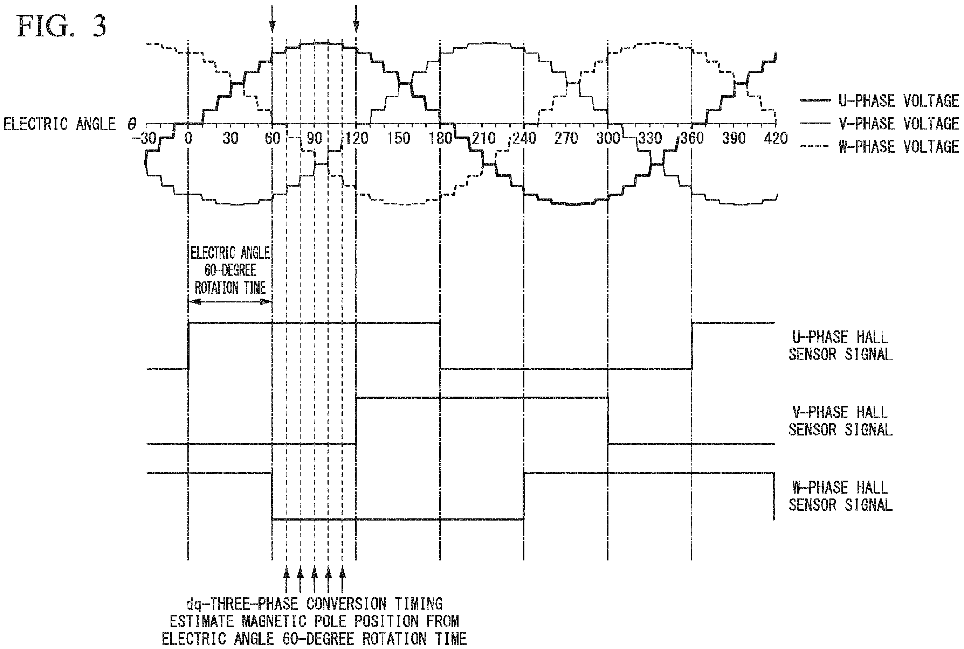

FIG. 3 is a timing chart showing an example of an operation of the motor drive apparatus 1.

FIG. 3 shows the level change of each of the U-phase voltage, the V-phase voltage, and the W-phase voltage and the level change of the U-phase Hall sensor signal, the V-phase Hall sensor signal, and the W-phase Hall sensor signal using the electric angle θ as the horizontal axis when the electric angle X-degree rotation time is an electric angle 10-degree rotation time (predetermined angle).

A dashed line is drawn in the vertical direction for each 60 degrees in the electric angles θ = 0 to 360 degrees. Each space between the dashed lines represents a sensor edge interval (electric angle 60-degree rotation time).

Among these, a value obtained by dividing the electric angle 60-degree rotation time, which is represented by electric angles θ = 0 to 60 degrees, by 6 becomes the electric angle 10-degree rotation time, which is represented by electric angles θ = 60 to 120 degrees. The dq three-phase conversion is performed 6 times at each electric angle 10-degree rotation time represented by electric angles θ = 60 to 120 degrees. Thereby, it is possible to obtain the level change of each of the U-phase voltage, the V-phase voltage, and the W-phase voltage in electric angles θ = 60 to 120 degrees. The dq three-phase conversion is performed 36 times, and thereby, the stator coil voltage of the brushless motor 11 is sinusoidally changed.

As described above, according to the embodiment of the present invention, the control unit 13 calculates the rotation number of the rotor based on the Hall sensor signal (magnetic flux change signal) and causes the gate driver 14 to output the PWM signal by which the power distribution timing to each phase of the brushless motor 11 is switched at the electric angle 10-degree rotation time (predetermined electric angle) even when the rotation number is changed. The inverter 15 sinusoidally changes and supplies the voltage supply to the stator coil of the brushless motor 11 based on the PWM signal. Thereby, it is possible to provide the motor drive apparatus 1 and the control method of the motor drive apparatus 1 capable of preventing an increase of the process load in the calculation in which the rotor position is estimated.

Next, the way to set the electric angle θ is described.

For example, when a resonant frequency (resonant frequency of the brushless motor) of a component, such as a motor yoke, to which the vibration of the motor is transmitted is matched with a frequency when the power distribution timing is switched at the electric angle θ, the operation sound may be increased.

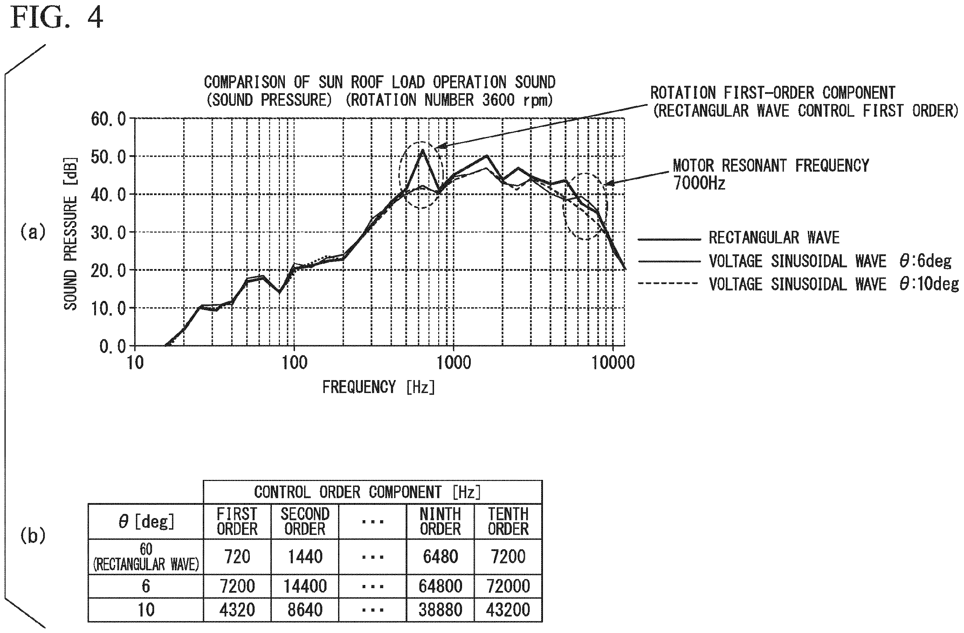

FIG. 4 is a view describing how to set the electric angle θ. Part (a) of FIG. 4 is a view showing a relationship between a sound pressure and a frequency when the power distribution timing is switched at the electric angle θ. Part (b) of FIG. 4 is a view showing a control order component at the electric angle θ.

The control order component is a frequency of power distribution timing at a predetermined electric angle θ when the motor (rotor) mechanically rotates one revolution. The control order component is represented by the following Expression.

$$\text{Control order component [Hz]} = \{(360 \times P \times N) / (\theta \times 60)\} \times \text{order}$$

In the control order component, P is the number of pole pairs, and N represents a rotation number [rpm (round per minute)].

In the case of θ = 60 (rectangular wave), the peak becomes gradually smaller as the order increases such as a first order of 720 Hz, a second order of 1440 Hz, ···, and a tenth order of 7200 Hz. In the case of θ = 6, the peak appears at the first order of 7200 Hz. In this way, when the frequency of the power distribution timing is matched with the resonant frequency (resonant frequency in the vicinity of 7000 Hz) of the brushless motor, the operation sound is increased. On the other hand, in the case of θ = 10, no peak appears.

As described above, by setting the electric angle θ such that the resonant frequency (resonant frequency of the brushless motor) of the motor yoke or a component to which the vibration of the motor is transmitted is not matched with the order component having a peak in a motor phase current, it is possible to reduce the operation sound. The resonant frequency is a value that is known in advance at the time of designing.

That is, the control unit 13 sets the electric angle θ (predetermined electric angle) such that the control order component that is calculated at the electric angle θ is not matched with the resonant frequency of the brushless motor, and thereby, it is possible to reduce the operation sound.

Next, a method in which it is unnecessary to change a command value of an ECU that commands the controller (control unit 13) of a voltage-command-type rectangular wave drive and sinusoidal wave drive is described.

In a voltage-command-type rectangular wave drive of the related art, the command voltage is converted into a PWM Duty for motor drive such that the command voltage becomes equal to a motor terminal voltage.

On the other hand, when the voltage is sinusoidally applied, the drive PWM Duty is variable depending on the rotor position (predetermined electric angle) as described above. Therefore, a simple conversion to the PWM Duty such as at the time of the rectangular wave drive cannot be performed.

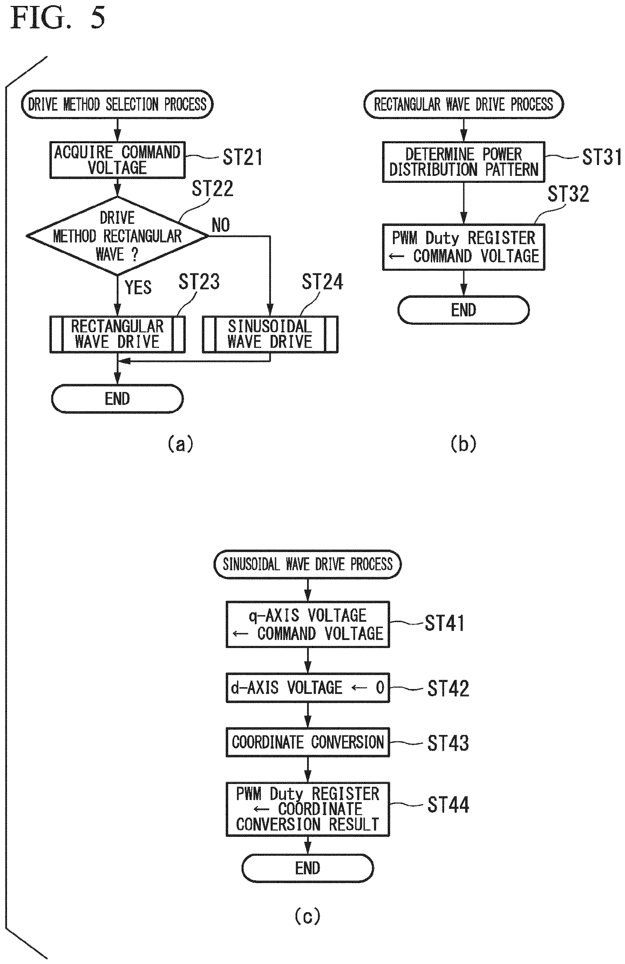

FIG. 5 is a view describing a conversion method of the PWM Duty for different drive methods.

The control unit 13 acquires a command voltage from an external ECU (Step ST21).

The control unit 13 determines whether or not the drive method is a rectangular wave drive (Step ST22).

When the drive method is the rectangular wave drive (Step ST22 - Yes), the control unit 13 proceeds to a rectangular wave drive process (Step ST23).

In Step ST23, the control unit 13 determines a power distribution pattern (Step ST31).

The control unit 13 inputs a command voltage to a PWM Duty register (Step ST32). The control unit 13 sets the PWM Duty register such that the command voltage becomes equal to a motor voltage.

On the other hand, when the drive method is the sinusoidal wave drive (Step ST22 - NO), the control unit 13 proceeds to a sinusoidal wave drive process (Step ST24).

In Step ST24, the control unit 13 multiplies the q-axis voltage Vq as the command voltage by $\sqrt{3}$ (performs multiplication using a square root of 3) (Step ST41). Thereby, it is possible to make the motor voltage at the time of the pulse wave drive be equal to a motor voltage effective value at the time of the sinusoidal wave drive.

The control unit 13 makes the d-axis voltage Vd be constantly 0 (Step ST42). The control unit 13 performs coordinate conversion (Step ST43). This coordinate conversion is the dq three-phase conversion (PWM Duty calculation) described above.

The control unit 13 inputs the coordinate conversion to the PWM Duty register (Step ST44). The control unit 13 sets the PWM Duty register such that the coordinate conversion result becomes equal to the motor voltage. The control unit 13 outputs the PWM command signal as the digital signal to the gate driver 14 based on the motor voltage included in the PWM Duty register.

Thereby, it is not necessary to change the command value of the ECU that commands the controller (control unit 13) of the voltage-command-type rectangular wave drive and sinusoidal wave drive. Further, a process in which the controller 13 replaces the command value with a current value or a rotation number is not necessary.

Next, a method of switching between a voltage sinusoidal wave drive and a rectangular wave drive is described.

In a motor drive method, the sinusoidal wave drive in which a motor that is sinusoidally magnetized is driven such that the motor phase current becomes sinusoidal generates a smaller operation sound due to a smaller torque ripple compared to the rectangular wave drive. However, the torque may be reduced compared to the rectangular wave drive depending on the drive condition such as an advanced angle, and a required torque may not be obtained in a high-load and high-rotation-speed region.

Therefore, the rectangular wave drive is used in a region in which the torque is insufficient when using the voltage sinusoidal wave drive. The drive method is switched between the voltage sinusoidal wave drive method and the rectangular wave drive method for each of motor operation regions which are a region in which the operation sound is concerned and a region in which a large torque is required.

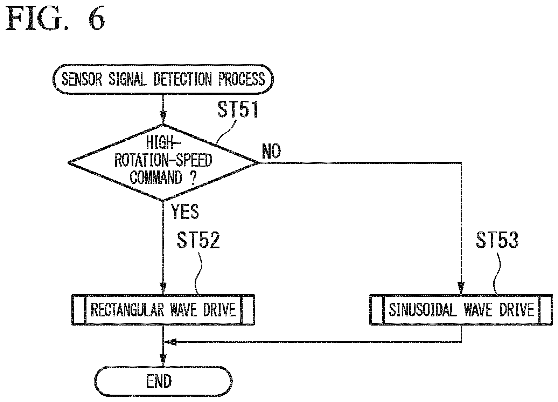

FIG. 6 is a view describing the method in which the drive method is switched.

The control unit 13 determines whether or not there is a high-rotation-speed command (Step ST51).

When there is the high-rotation-speed command (Step ST51 - Yes), the control unit 13 proceeds to a rectangular wave drive process (Step ST52). Step ST52 is the same as Step S23 shown in FIG. 5. The control unit 13 proceeds to Step S31 shown in FIG. 5.

On the other hand, when there is no high-rotation-speed command (Step ST51 - No), the control unit 13 proceeds to a sinusoidal wave drive process (Step ST53). Step ST53 is the same as Step S24 shown in FIG. 5. The control unit 13 proceeds to Step S41 shown in FIG. 5.

Thereby, it is possible to realize both an operation in a high-load and high-rotation-speed region and an operation sound reduction operation in a low-load and low-rotation-speed region in which the operation sound is specifically concerned without specification change (torque constant increase) of the motor.

Next, another embodiment of the present invention is described with reference to the drawings. In the following description, the same reference numerals are given to configuration components which are the same as or similar to those of the embodiment described above, and the description of the components is simplified or omitted.

In the present embodiment, the control unit 13 shown in FIG. 1 obtains a rotor rotation number of the brushless motor 11 based on a U-phase Hall sensor signal, a V-phase Hall sensor signal, and a W-phase Hall sensor signal, calculates a plurality of predetermined electric angles in accordance with a change of the rotor rotation number, selects one predetermined electric angle from the plurality of predetermined electric angles, and causes the gate driver 14 to output a PWM signal by which a power distribution timing to each phase of the brushless motor 11 is switched at the selected predetermined electric angle.

In the present embodiment, the power distribution timing T is not a fixed timing of the related art; but a plurality of predetermined electric angles obtained by dividing an electric angle 60-degree rotation time by a predetermined number are calculated, one predetermined electric angle is selected from the plurality of predetermined electric angles, and the power distribution timing T is changed as the selected predetermined electric angle. That is, it is possible to determine the power distribution timing T in accordance with the rotor rotation number when the electric angle $\theta$ is fixed to a predetermined electric angle (first predetermined electric angle and second predetermined electric angle).

For example, when the electric angle 60-degree rotation time is 3.33 ms, the rotor rotation number is 1000 rpm from the Hall sensor signal. At this time, the first predetermined electric angle ($\theta$ = 10 degrees) may be obtained by dividing the electric angle 60-degree rotation time by 6 as the first predetermined number in order to make the power distribution timing 0.555 ms. Further, when the electric angle 60-degree rotation time is 1.11 ms, the rotor rotation number is 3000 rpm from the Hall sensor signal. At this time, the second predetermined electric angle ($\theta$ = 12 degrees) may be obtained by dividing the electric angle 60-degree rotation time by the second predetermined number of 5 in order to make the power distribution timing 0.222 ms.

In this way, in the present embodiment, a plurality of predetermined electric angles obtained by dividing an electric angle 60-degree rotation time by a predetermined number are calculated, one predetermined electric angle is selected from the plurality of predetermined electric angles, and the power distribution timing T is changed as the selected predetermined electric angle.

The plurality of predetermined electric angles are present to make the predetermined electric angle (second predetermined electric angle) at the time of high-speed rotation of the rotor to be greater than the predetermined electric angle (first predetermined electric angle) at the time of low-speed rotation and prevent an increase of the process load at the time of high-speed rotation.

Therefore, the control unit 13 obtains the rotor rotation number of the brushless motor 11 based on the U-phase Hall sensor signal, the V-phase Hall sensor signal, and the W-phase Hall sensor signal, calculates a plurality of predetermined electric angles in accordance with the change of the rotor rotation number, selects one predetermined electric angle from the plurality of predetermined electric angles, and causes the gate driver 14 to output the PWM signal by which the power distribution timing to each phase of the brushless motor 11 is switched at the selected predetermined electric angle. The control unit 13 determines which one is selected from the plurality of predetermined electric angles by determining whether or not the calculated rotor rotation number is less than a preset rotor rotation number (for example, 3000 rpm). That is, when the rotor rotation number is less than the preset rotor rotation number, the control unit 13 calculates the first predetermined electric angle of the predetermined electric angles by dividing the electric angle 60-degree rotation time by the first predetermined number and changes the PWM signal each time the first predetermined electric angle elapses from the electric angle 60-degree rotation time. On the other hand, when the rotor rotation number is equal to or more than the preset rotor rotation number, the control unit 13 calculates the second predetermined electric angle of the predetermined electric angles by dividing the electric angle 60-degree rotation time by the second predetermined number and changes the PWM signal each time the second predetermined electric angle elapses from the electric angle 60-degree rotation time.

Therefore, a configuration is adopted in which the plurality of predetermined electric angles includes two predetermined electric angles which are the first predetermined electric angle and the second predetermined electric angle. Further, a configuration is adopted in which the predetermined number by which the electric angle 60-degree rotation time which is the edge interval time of the Hall sensor is divided includes two predetermined numbers which are the first predetermined number and the second predetermined number, and the second predetermined number is a smaller value than the first predetermined number. The present embodiment is described using an example in which the plurality of predetermined electric angles are two predetermined electric angles; however, the number of predetermined electric angles may be three or more.

According to the configuration described above, with respect to how the control unit 13 determines the predetermined electric angle and changes the PWM signal each time the predetermined electric angle elapses from the electric angle 60-degree rotation time as described above with reference to FIG. 2, the predetermined electric angle is the first predetermined electric angle and the second predetermined electric angle.

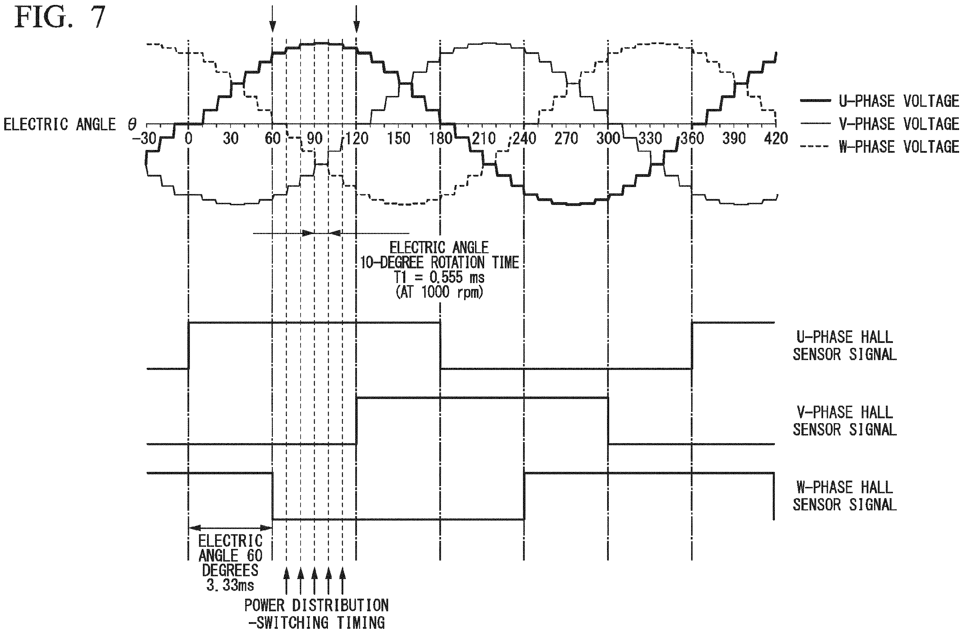

FIG. 7 is a timing chart showing another example of an operation of the motor drive apparatus 1.

FIG. 7 shows the level change of each of the U-phase voltage, the V-phase voltage, and the W-phase voltage and the level change of the U-phase Hall sensor signal, the V-phase Hall sensor signal, and the W-phase Hall sensor signal using the electric angle $\theta$ as the horizontal axis when the electric angle X-degree rotation time is an electric angle 10-degree rotation time (first predetermined angle).

A dashed line is drawn in the vertical direction for each 60 degrees in the electric angles $\theta$ = 0 to 360 degrees. Each space between the dashed lines represents a sensor edge interval (electric angle 60-degree rotation time).

In the case of FIG. 7, the rotor rotation number that is calculated based on the electric angle 60-degree rotation time of 3.33 ms is 1000 rpm, and among these, a value T1 = 0.555 ms obtained by dividing the electric angle 60-degree rotation time, which is represented by electric angles $\theta$ = 0 to 60 degrees, by 6 (first predetermined number) becomes the electric angle 10-degree rotation time, which is represented by electric angles $\theta$ = 60 to 120 degrees. The dq three-phase conversion is performed 6 times at each electric angle 10-degree rotation time represented by electric angles $\theta$ = 60 to 120 degrees. Thereby, it is possible to obtain the level change of each of the U-phase voltage, the V-phase voltage, and the W-phase voltage in electric angles $\theta$ = 60 to 120 degrees.

The dq three-phase conversion is performed 36 times, and thereby, the stator coil voltage of the brushless motor 11 is sinusoidally changed.

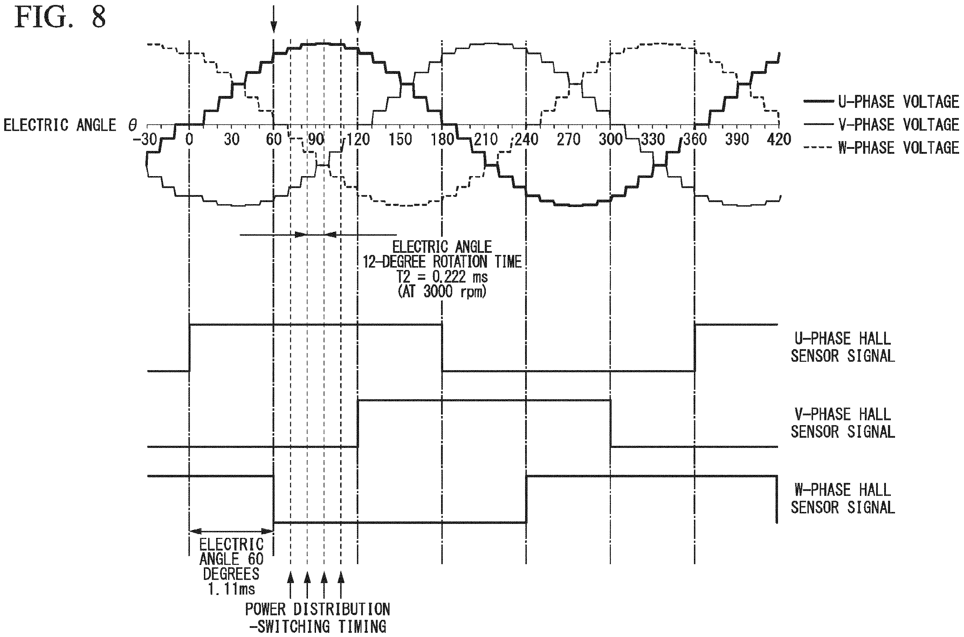

FIG. 8 is a timing chart showing still another example of an operation of the motor drive apparatus 1.

FIG. 8 shows the level change of each of the U-phase voltage, the V-phase voltage, and the W-phase voltage and the level change of the U-phase Hall sensor signal, the V-phase Hall sensor signal, and the W-phase Hall sensor signal using the electric angle $\theta$ as the horizontal axis when the electric angle X-degree rotation time is an electric angle 12-degree rotation time (second predetermined angle).

A dashed line is drawn in the vertical direction for each 60 degrees in the electric angles $\theta$ = 0 to 360 degrees. Each space between the dashed lines represents a sensor edge interval (electric angle 60-degree rotation time).

In the case of FIG. 8, the rotor rotation number that is calculated based on the electric angle 60-degree rotation time of 1.11 ms is 3000 rpm, and among these, a value T2 = 0.222 ms obtained by dividing the electric angle 60-degree rotation time, which is represented by electric angles $\theta$ = 0 to 60 degrees, by 5 (second predetermined number) becomes the electric angle 12-degree rotation time, which is represented by electric angles $\theta$ = 60 to 120 degrees. The dq three-phase conversion is performed 5 times at each electric angle 12-degree rotation time represented by electric angles $\theta$ = 60 to 120 degrees. Thereby, it is possible to obtain the level change of each of the U-phase voltage, the V-phase voltage, and the W-phase voltage in electric angles $\theta$ = 60 to 120 degrees.

The dq three-phase conversion is performed 30 times, and thereby, the stator coil voltage of the brushless motor 11 is sinusoidally changed.

As shown in FIG. 7 and FIG. 8, the electric angle 60-degree rotation time is 1.11 ms when the rotor rotation number is 3000 rpm and is 3.33 ms when the rotor rotation number is 1000 rpm.

The electric angle 10-degree rotation time (first predetermined angle) when switching the power distribution timing at the electric angle of 10 degrees is T1, and the electric angle 12-degree rotation time when switching the power distribution timing at the electric angle of 12 degrees is T2 (second predetermined angle). When the rotor rotation number is 3000 rpm, T1 = 0.185 ms and T2 = 0.222 ms (refer to FIG. 4) are obtained, and when the rotor rotation number is 1000 rpm, T1 = 0.555 ms (refer to FIG. 3) and T2 = 0.666 ms are obtained.

When switching the power distribution timing at each electric angle of 10 degrees at the time of 3000 rpm, T1 becomes equal to 0.185 ms, and the process load is greater compared to that at the time of 1000 rpm.

Therefore, by switching the power distribution at each electric angle of 12 degrees at the time of 3000 rpm and making T2 equal to 0.222 ms, it is possible to reduce the process load.

When switching the power distribution at an electric angle of 12 degrees at the time of 1000 rpm, T2 becomes equal to 0.666 ms, and there may be a possibility in which resolution is reduced, and controllability is degraded.

Therefore, by switching the power distribution at each electric angle of 10 degrees at the time of 1000 rpm and making T1 equal to 0.555 ms, it is possible to prevent the controllability in a low-speed rotation region from being lowered.

In this way, the control unit 13 calculates a plurality of predetermined electric angles in accordance with the change of the rotor rotation number, selects one predetermined electric angle from the plurality of predetermined electric angles, and causes the gate driver to output the PWM signal by which the power distribution timing to each phase of the brushless motor is switched at the selected predetermined electric angle. Which one is selected from the plurality of predetermined electric angles is determined by determining whether or not the calculated rotor rotation number is less than a preset rotor rotation number (3000 rpm in the above description). That is, when the rotor rotation number is less than the preset rotor rotation number, the control unit 13 calculates 10 degrees (first predetermined electric angle) of the predetermined electric angles by dividing the electric angle 60-degree rotation time by 6 (first predetermined number). On the other hand, when the rotor rotation number is equal to or more than the preset rotor rotation number, the control unit 13 calculates 12 degrees (second predetermined electric angle) of the predetermined electric angles by dividing the electric angle 60-degree rotation time by 5 (second predetermined number). Accordingly, by using the first predetermined electric angle during low-speed rotation and by using the second predetermined electric angle during high-speed rotation, it is possible to reduce the process load in the high-speed rotation region while preventing the controllability in the low-speed rotation region from being lowered.

As described above, according to the embodiment of the present invention, the control unit 13 calculates the rotor rotation number based on the magnetic flux change signal, calculates the electric angle 10-degree rotation time and the electric angle 12-degree rotation time (the plurality of predetermined electric angles) in accordance with the change of the rotor rotation number, selects one predetermined electric angle from the plurality of predetermined electric angles, and causes the gate driver 14 to output the PWM signal by which the power distribution timing to each phase of the brushless motor 11 is switched at the electric angle 12-degree rotation time (selected predetermined electric angle). The inverter 15 sinusoidally changes and supplies the voltage supply to the stator coil of the brushless motor 11 based on the PWM signal. Thereby, it is possible to provide a motor drive apparatus 1 and a control method of the motor drive apparatus 1 capable of preventing an increase in process load in a calculation in which a rotor position is estimated and preventing an increase in process load at a high-speed rotation.

Although the embodiments of the present invention are described, the motor drive apparatus of the present invention is not limited only to the above examples shown in the drawings. A variety of changes can be made to the embodiments without departing from the scope of the invention.

DESCRIPTION OF THE REFERENCE SYMBOLS

1       motor drive apparatus
11     brushless motor
12     Hall sensor
13     control unit
14     gate driver
15     inverter
16     direct current electric power source

**Claims**

1. A motor drive apparatus that comprises a brushless motor, a Hall sensor, a control unit, a gate driver, and an inverter, wherein

 the brushless motor has a three-phase motor structure,
 the Hall sensor detects a magnetic flux change signal in an operation of the brushless motor,
 the control unit obtains a rotor rotation number of the brushless motor based on the magnetic flux change signal, calculates a predetermined electric angle even when the rotor rotation number is changed, and causes the gate driver to output a PWM signal by which a power distribution timing to each phase of the brushless motor is switched at the predetermined electric angle, and
 the inverter sinusoidally changes and supplies a voltage supply to a stator coil of the brushless motor based on the PWM signal.

2. The motor drive apparatus according to Claim 1, wherein

 the control unit calculates the predetermined electric angle by dividing an electric angle 60-degree rotation time which is an edge interval time of the Hall sensor by a predetermined number and changes the PWM signal each time the predetermined electric angle elapses from the electric angle 60-degree rotation time.

3. The motor drive apparatus according to Claim 1 or 2, wherein

 the control unit has a table in which a trigonometric function value used for generating the PWM signal is stored.

4. The motor drive apparatus according to any one of Claims 1 to 3, wherein

 the control unit sets the predetermined electric angle such that a control order component that is calculated at the predetermined electric angle is not matched with a resonant frequency of the brushless motor.

5. A motor drive apparatus control method which is a control method of a motor drive apparatus that comprises a brushless motor having a three-phase motor structure, a Hall sensor, a control unit, a gate driver, and an inverter, the method comprising:

 a detection step in which the Hall sensor detects a magnetic flux change signal in an operation of the brushless motor;
 an output step in which the control unit obtains a rotor rotation number of the brushless motor based on the magnetic flux change signal, calculates a predetermined electric angle even when the rotor rotation number is changed, and causes the gate driver to output a PWM signal by which a power distribution timing to each phase of the brushless motor is switched at the predetermined electric angle; and
 a supply step in which the inverter sinusoidally changes and supplies a voltage supply to a stator coil of the brushless motor based on the PWM signal.

6. A motor drive apparatus, comprising a brushless motor, a Hall sensor, a control unit, a gate driver, and an inverter, wherein

 the brushless motor has a three-phase motor structure,
 the Hall sensor detects a magnetic flux change signal in an operation of the brushless motor,
 the control unit obtains a rotor rotation number of the brushless motor based on the magnetic flux change signal, calculates a plurality of predetermined electric angles in accordance with a change of the rotor rotation number, selects one predetermined electric angle from the plurality of predetermined electric angles, and causes the gate driver to output a PWM signal by which a power distribution timing to each phase of the brushless motor is switched at the selected predetermined electric angle, and
 the inverter sinusoidally changes and supplies a voltage supply to a stator coil of the brushless motor based on the PWM signal.

7. The motor drive apparatus according to Claim 6, wherein

 the plurality of predetermined electric angles includes two predetermined electric angles which are a first predetermined electric angle and a second predetermined electric angle,
 a predetermined number by which an electric angle 60-degree rotation time which is an edge interval time of the Hall sensor is divided includes two predetermined numbers which are a first predetermined number and a second predetermined number,
 the second predetermined number is a smaller value than the first predetermined number,

when the rotor rotation number is less than a preset rotor rotation number, the control unit calculates the first predetermined electric angle by dividing the electric angle 60-degree rotation time by the first predetermined number and changes the PWM signal each time the first predetermined electric angle elapses from the electric angle 60-degree rotation time, and

when the rotor rotation number is equal to or more than the preset rotor rotation number, the control unit calculates the second predetermined electric angle by dividing the electric angle 60-degree rotation time by the second predetermined number and changes the PWM signal each time the second predetermined electric angle elapses from the electric angle 60-degree rotation time.

8. The motor drive apparatus according to Claim 6 or 7, wherein
the control unit has a table in which a trigonometric function value used for generating the PWM signal is stored.

9. A motor drive apparatus control method which is a control method of a motor drive apparatus that comprises a brushless motor having a three-phase motor structure, a Hall sensor, a control unit, a gate driver, and an inverter, the method comprising:

a detection step in which the Hall sensor detects a magnetic flux change signal in an operation of the brushless motor;
an output step in which the control unit obtains a rotor rotation number of the brushless motor based on the magnetic flux change signal, calculates a plurality of predetermined electric angles in accordance with a change of the rotor rotation number, selects one predetermined electric angle from the plurality of predetermined electric angles, and causes the gate driver to output a PWM signal by which a power distribution timing to each phase of the brushless motor is switched at the selected predetermined electric angle; and
a supply step in which the inverter sinusoidally changes and supplies a voltage supply to a stator coil of the brushless motor based on the PWM signal.

# FIG. 1

# FIG. 2

**Left flowchart — SENSOR SIGNAL DETECTION PROCESS:**

( SENSOR SIGNAL DETECTION PROCESS )

ST1: HALL SENSOR SIGNAL LEVEL ?

- MAGNETIC POLE POSITION =0
- MAGNETIC POLE POSITION =60
- MAGNETIC POLE POSITION =120
- MAGNETIC POLE POSITION =180
- MAGNETIC POLE POSITION =240
- MAGNETIC POLE POSITION =300

ST2: ACQUIRE SENSOR EDGE INTERVAL TIME (READ OUT MEASUREMENT TIMER VALUE)

ST3: CALCULATE ELECTRIC ANGLE X-DEGREE ROTATION TIME BASED ON SENSOR EDGE INTERVAL TIME

ST4: START POWER DISTRIBUTION-SWITCHING TIMER (INTERRUPTION AT EACH ELAPSE OF ELECTRIC ANGLE X-DEGREE ROTATION TIME)

ST5: dq THREE-PHASE CONVERSION (PWM Duty CALCULATION)

ST6: OUTPUT PWM Duty

( END )

**Right flowchart — INTERRUPTION OF POWER DISTRIBUTION-SWITCHING TIMER:**

( INTERRUPTION OF POWER DISTRIBUTION-SWITCHING TIMER )

ST7: MAGNETIC POLE POSITION = +X DEGREES

ST8: dq THREE-PHASE CONVERSION (PWM Duty CALCULATION)

ST9: OUTPUT PWM Duty

( END )

EP 3 282 574 A1

FIG. 3

ELECTRIC ANGLE $\theta$

—— U-PHASE VOLTAGE
— V-PHASE VOLTAGE
---- W-PHASE VOLTAGE

ELECTRIC ANGLE 60-DEGREE ROTATION TIME

U-PHASE HALL SENSOR SIGNAL

V-PHASE HALL SENSOR SIGNAL

W-PHASE HALL SENSOR SIGNAL

dq-THREE-PHASE CONVERSION TIMING
ESTIMATE MAGNETIC POLE POSITION FROM
ELECTRIC ANGLE 60-DEGREE ROTATION TIME

EP 3 282 574 A1

# FIG. 4

COMPARISON OF SUN ROOF LOAD OPERATION SOUND
(SOUND PRESSURE) (ROTATION NUMBER 3600 rpm)

(a)

ROTATION FIRST-ORDER COMPONENT
(RECTANGULAR WAVE CONTROL FIRST ORDER)

MOTOR RESONANT FREQUENCY
7000Hz

——— RECTANGULAR WAVE
——— VOLTAGE SINUSOIDAL WAVE $\theta$:6deg
------- VOLTAGE SINUSOIDAL WAVE $\theta$:10deg

(b)

| $\theta$ [deg] | CONTROL ORDER COMPONENT [Hz] | | | | |
|---|---|---|---|---|---|
| | FIRST ORDER | SECOND ORDER | ... | NINTH ORDER | TENTH ORDER |
| 60 (RECTANGULAR WAVE) | 720 | 1440 | ... | 6480 | 7200 |
| 6 | 7200 | 14400 | ... | 64800 | 72000 |
| 10 | 4320 | 8640 | ... | 38880 | 43200 |

EP 3 282 574 A1

# FIG. 5

**DRIVE METHOD SELECTION PROCESS**

↓

ACQUIRE COMMAND VOLTAGE — ST21

↓

ST22

DRIVE METHOD RECTANGULAR WAVE ?

NO →

YES ↓    ST23    ST24

| RECTANGULAR WAVE DRIVE | | SINUSOIDAL WAVE DRIVE |

↓

**END**

(a)

**RECTANGULAR WAVE DRIVE PROCESS**

↓

DETERMINE POWER DISTRIBUTION PATTERN — ST31

ST32

↓

PWM Duty REGISTER ← COMMAND VOLTAGE

↓

**END**

(b)

**SINUSOIDAL WAVE DRIVE PROCESS**

↓

q-AXIS VOLTAGE ← COMMAND VOLTAGE — ST41

↓

d-AXIS VOLTAGE ← 0 — ST42

↓

COORDINATE CONVERSION — ST43

↓

PWM Duty REGISTER ← COORDINATE CONVERSION RESULT — ST44

↓

**END**

(c)

18

FIG. 6

```
        ( SENSOR SIGNAL DETECTION PROCESS )
                        │
                        │         ST51
                        ▼
                   ╱ HIGH-    ╲
                  ╱ ROTATION-SPEED ╲──── NO ──────────────┐
                  ╲ COMMAND ?    ╱                         │
                   ╲          ╱                            │
                      │ YES                                │
                      │                                    │
                  ST52 │                               ST53 │
                      ▼                                    ▼
          ┌─┤ RECTANGULAR WAVE DRIVE ├─┐      ┌─┤ SINUSOIDAL WAVE DRIVE ├─┐
          └──────────┬──────────────┘      └──────────┬─────────────┘
                     │                                 │
                     ▼◄────────────────────────────────┘
                ( END )
```

FIG. 7

# FIG. 8

ELECTRIC ANGLE θ

—U-PHASE VOLTAGE
—V-PHASE VOLTAGE
---- W-PHASE VOLTAGE

ELECTRIC ANGLE
12-DEGREE ROTATION TIME
T2 = 0.222 ms
(AT 3000 rpm)

U-PHASE HALL
SENSOR SIGNAL

V-PHASE HALL
SENSOR SIGNAL

W-PHASE HALL
SENSOR SIGNAL

ELECTRIC
ANGLE 60
DEGREES
1.11ms

POWER DISTRIBUTION
-SWITCHING TIMING

EP 3 282 574 A1

## INTERNATIONAL SEARCH REPORT

| International application No. |
|---|
| PCT/JP2016/061263 |

### A. CLASSIFICATION OF SUBJECT MATTER
*H02P6/17(2016.01)i*

According to International Patent Classification (IPC) or to both national classification and IPC

### B. FIELDS SEARCHED

Minimum documentation searched (classification system followed by classification symbols)
H02P6/17

Documentation searched other than minimum documentation to the extent that such documents are included in the fields searched
Jitsuyo Shinan Koho        1922-1996    Jitsuyo Shinan Toroku Koho    1996-2016
Kokai Jitsuyo Shinan Koho  1971-2016    Toroku Jitsuyo Shinan Koho    1994-2016

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2005-328644 A  (Matsushita Electric Industrial Co., Ltd.),<br>24 November 2005 (24.11.2005),<br>paragraphs [0045] to [0085]; fig. 1 to 11<br>(Family: none) | 1-2,5-7,9<br>3-4,8 |
| X<br>Y | JP 2012-65495 A  (Sanken Electric Co., Ltd.),<br>29 March 2012 (29.03.2012),<br>paragraphs [0002] to [0008]; fig. 6<br>(Family: none) | 1-2,5<br>3-4 |

☒ Further documents are listed in the continuation of Box C.    ☐ See patent family annex.

| | |
|---|---|
| * Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>23 June 2016 (23.06.16) | Date of mailing of the international search report<br>05 July 2016 (05.07.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/061263

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-168797 A  (Matsushita Electric Industrial Co., Ltd.), 30 June 2005 (30.06.2005), paragraph [0034] & US 2005/0127865 A1 paragraph [0047] & EP 1542351 A2    & KR 10-2005-0058191 A & CN 1627625 A    & TW 200528057 A | 3,8 |
| Y | JP 2006-211847 A  (Denso Corp.), 10 August 2006 (10.08.2006), paragraphs [0063] to [0064]; fig. 17 (Family: none) | 4 |

Form PCT/ISA/210 (continuation of second sheet) (January 2015)

**EP 3 282 574 A1**

**Patent documents cited in the description**

- JP 2015080769 A
- JP 2015080770 A
- JP H9121583 B